# EUROPEAN PATENT APPLICATION

(11) **EP 4 841 960 A2**
(43) Date of publication of application: **18.11.2026**
(21) Application number: 26200884.0
(22) Date of filing: 07.01.2019
(51) Int. Cl.: H04L 67/00

(54) **METHOD AND SYSTEM FOR CONTROLLING SOFTWARE UPDATES ON A NETWORK CONNECTED DEVICE**

(30) Priority: 12.01.2018 US 201815869868
(62) Document number(s) of the earlier application(s) in accordance with Art. 76 EPC: 24167064.5 / 4 446 877; 19150593.2 / 3 511 825
(71) Applicant: Malikie Innovations Limited, Dun Laoghaire, Dublin A96 VR66 (IE)
(72) Inventor: WILLIS, Edward Snow, Waterloo, N2K 0A7 (CA); QADERI, Hashim Mohammad, Waterloo, N2K 0A7 (CA); HUTCHENS, Scott, Waterloo, N2K 0A7 (CA); INGLIS, David Alan, Waterloo, N2K 0A7 (CA)
(74) Representative: Murgitroyd & Company

(57) **Abstract**

The method at a device to be updated (110, 112, 114; 216) being affixed to or part of an unmanned vehicle and lacking a graphical user interface configured to initiate and monitor installation of software update, comprises: receiving a software update download for updating software of the device to be updated; determining one or more device update preconditions indicating that the device to be updated is ready for updating; sending to a computing device acting as a switchboard between the device to be updated and an electronic device, a connection request to connect the device to be updated to the computing device; sending, to the computing device, information indicating that update conditions have been met; receiving, from the computing device, an instruction to install the software update download; and in response to the instruction, initiating an installation process to install the software update download.

## Description

### FIELD OF THE DISCLOSURE

The present disclosure relates to over-the-air updates for network connected devices, and in particular relates to the over-the-air updates for network connected devices having no feedback mechanism.

### BACKGROUND

Network connected devices often contain software that occasionally needs to be updated. For example, in vehicles, an electronic control unit (ECU) controls a system or subsystem of the vehicle, and may occasionally need firmware or software updates.

However, in many cases, such network connected devices may not have a graphical user interface to provide for the initiation of an update, nor is there any mechanism to provide feedback as to the status of an update.

Further, in many cases, it is undesirable to push an update to such network connected device at a random time. For example, it would be dangerous to push an update to a braking system in a vehicle while the vehicle is in operation. Even if the vehicle is stopped or if the engine is off, in some cases it may not be an appropriate time to make an update. For example, a vehicle may be at a weighing station or fueling station, and the pushing of the update may prevent the vehicle from leaving such station for an extended period of time, delaying other vehicles from being serviced at such station.

### SUMMARY

Accordingly there is provided a method, a device and a computer readable medium as detailed in the claims that follow.

### BRIEF DESCRIPTION OF THE DRAWINGS

The present disclosure will be better understood with reference to the drawings, in which:
**Figure 1** is a block diagram showing an example architecture for a system in accordance with the embodiments of the present disclosure;
**Figure 2** is a data flow diagram showing the updating of a device using a switchboard and an electronic device;
**Figure 3** is a block diagram showing data structures for associating an electronic device with a device to be updated;
**Figure 4** is a block diagram of an example computing device capable of being used with the embodiments of the present disclosure; and
**Figure 5** is a block diagram of an example mobile device capable of being used with the embodiments of the present disclosure.

### DETAILED DESCRIPTION OF THE DRAWINGS

The present disclosure provides a method at a computing device acting as a switchboard between an electronic device and a device to be updated, the method comprising: receiving, at the computing device, a connection request from the electronic device, the connection request including an identifier for the device to be updated; receiving, at the computing device, a connection request from the device to be updated; associating, at the computing device, the connection request from the electronic device and the connection request from the device to be updated; forwarding, at the computing device, a message from the device to be updated to the electronic device that update conditions have been met; forwarding, at the computing device, a message from the electronic device to the device to be updated to start an update process; and forwarding, at the computing device, update status information from the device to be updated to the electronic device.

The present disclosure further provides a computing device configured to act as a switchboard between an electronic device and a device to be updated, the computing device comprising: a processor; and a communications subsystem, wherein the computing device is configured to: receive a connection request from the electronic device, the connection request including an identifier for the device to be updated; receive a connection request from the device to be updated; associate the connection request from the electronic device and the connection request from the device to be updated; forward a message from the device to be updated to the electronic device that update conditions have been met; forward a message from the electronic device to the device to be updated to start an update process; and forward update status information from the device to be updated to the electronic device.

The present disclosure further provides a computer readable medium for storing instruction code, which when executed by a processor of a computing device configured to act as a switchboard between an electronic device and a device to be updated, cause the computing device to: receive a connection request from the electronic device, the connection request including an identifier for the device to be updated; receive a connection request from the device to be updated; associate the connection request from the electronic device and the connection request from the device to be updated; forward a message from the device to be updated to the electronic device that update conditions have been met; forward a message from the electronic device to the device to be updated to start an update process; and forward update status information from the device to be updated to the electronic device.

Therefore, in accordance with the embodiments of present disclosure, methods and systems are provided for network connected devices that have no graphical user interfaces, but which have network interfaces, to have updates initiated and monitored through another electronic device. A network connected device, as used herein, may be any stationary or mobile computing device. For example, the device may be any device affixed to or part of shipping containers, truck trailers, or truck cabins in one embodiment. In other embodiments, the device may be affixed to or part or any vehicle, including motor vehicles (e.g. automobiles, cars, trucks, buses, motorcycles, etc.), aircraft (e.g. airplanes, unmanned aerial vehicles, unmanned aircraft systems, drones, helicopters, etc.), spacecraft (e.g. space planes, space shuttles, space capsules, space stations, satellites etc.), watercraft (e.g. ships, boats, hovercraft, submarines etc.), rail vehicles (e.g. trains and trams, etc.) and other types of vehicles including any combination of the foregoing, whether currently existing or after arising, among others.

In other cases, the network connected device may be a device such as an Internet of things (IOT) device, endpoints, home automation devices, medical equipment in hospital or home environments, inventory tracking devices, environmental monitoring devices, energy management devices, infrastructure management devices, vehicles or devices for vehicles, fixed electronic devices, among others.

The network connected device may connect, in some cases, to a network through another device. For example, the network connected device may be an ECU in a vehicle that communicates using a gateway in the vehicle to connect to, for example, a cellular network. Other options for such devices are possible.

Further the electronic device having a user interface may be any computing device, including a mobile device such as a cellular telephone, smartphone, internet appliance, laptop, desktop computer, smart watch, wearable, or other similar device.

While the embodiments of the present disclosure are provided below with regard to vehicle systems, the present disclosure is not limited to vehicle systems and any device having a network connection can be used with the embodiments of the present disclosure.

In the case of vehicles, the specific timing of an update cannot generally be inferred simply by observing the device state. For example, simply because a vehicle is not running and has the keys in the ignition, this does not imply that it is a good time for the vehicle to be updated. The vehicle could be at a gas pump, weighing station, among other scenarios, where the disabling of the vehicle for a time period to perform an update may be inappropriate.

Therefore, in accordance with the embodiments of the present disclosure, a user is allowed to initiate, via an electronic device, the update of a network connected device.

Further, in accordance with some embodiments of the present disclosure, a user may have difficulty identifying a specific device on which the update is to be performed. In such situation, a check that the appropriate device is being updated may be beneficial.

For example, when dealing with a fleet of vehicles such as trucks or rental vehicles, the person performing the update may have various vehicles to select from. Utilizing a vehicle identification number or other similar unique identifier, identification of the particular vehicle that the user wishes to update may occur. However, such system of selecting the vehicle may be error-prone and therefore, in accordance with embodiments described below, checks may be made to ensure that the correct vehicle is being updated.

Further, as described below, a network connected device may be on a different network than the electronic device being used for the update. For example, a network connected device may be secured on a private network. Many cellular carriers configure their networks utilizing private networks.

However, the electronic device may be on a different private network.

Given that there is no guarantee that the device and the electronic device are on the same private network, direct connectivity between the electronic device and the device being updated may be difficult.

Based on this, in accordance with the present disclosure, an intermediary server is provided, referred to herein as an over-the-air (OTA) switchboard. This server component is hosted in a manner that makes it available from the public internet and therefore both the device being updated and the electronic device can connect to such server.

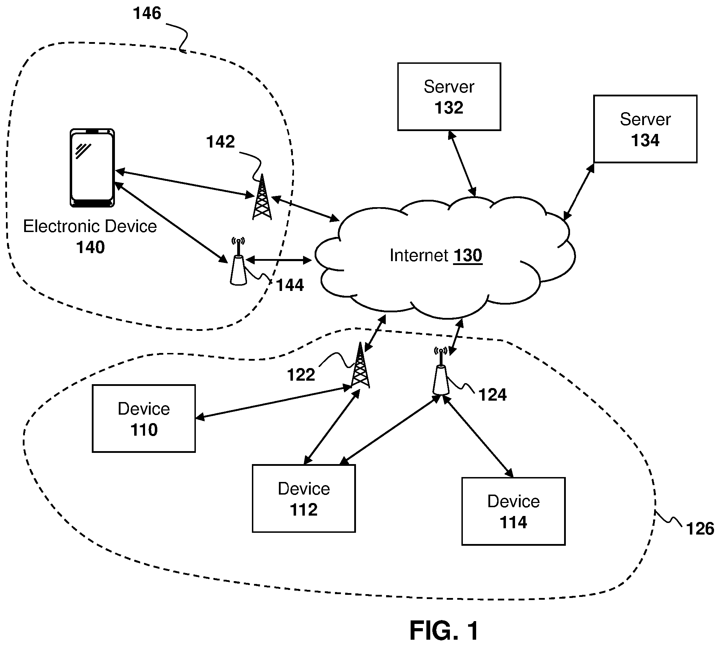

In particular, reference is now made to **Figure 1**, which shows a simplified architecture for a system in accordance with the present disclosure. In the embodiment of **Figure 1**, a plurality of devices, namely devices **110**, **112** and **114**, communicate through a base station **122** or access point **124** to the Internet **130** or other similar network. As provided above, devices **110**, **112**, or **114** may be any device that needs to have software updates, and may, for example, be an ECU in a vehicle.

Communication may be with one or a plurality of the servers, such as servers **132** or **134** in the embodiment of **Figure 1**. For example, server **132** may be an authentication server while server **134** may be an over-the-air switchboard server in one embodiment. However, in other embodiments, the functionality of servers **132** and **134** may be found on a single server.

An electronic device **140** communicates through a base station **142** or access point **144** with Internet **130**, and may thereby communicate with servers **132** and **134**.

As indicated above, the electronic device **140** and a network device such as device **110** may be on different private networks. For example, in the embodiment of **Figure 1**, electronic device **140** is in a first private network **146** with a carrier and device **110** may be in a second private network **126**, with the same or a different carrier.

Based on potentially being on different private networks, communication may occur between an electronic device **140** and a device **110** utilizing a server **132**, as described in more detail below.

Utilizing a system as described with regard to **Figure 1** above, an update may occur based on a user receiving on an electronic device a notification that the vehicle or similar device to be updated has an update pending. Such update notification may be provided, for example, from an update server or other network element.

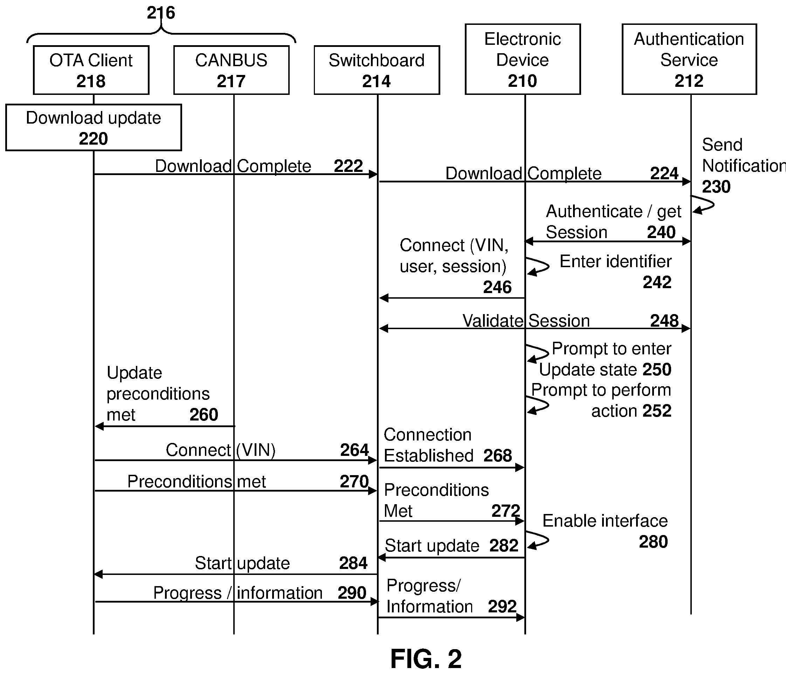

Specifically, reference is now made to **Figure 2**. In the embodiment of **Figure 2**, an electronic device **210** may include software or an application for initiating and monitoring updates on a vehicle.

An authentication service **212** provides authentication for both the electronic device **210** as well as for vehicle communications, as described below.

Further, a switchboard **214** allows communication between the electronic device **210** and a vehicle.

The vehicle **216** includes internal communications between components or Electronic Control Units (ECU). Such internal communications may be based on any wired or wireless technology. The internal communications may allow for firmware or software for a component in the vehicle to be updated. In the example of **Figure 2**, the internal communication is performed using CANBUS **217**.

Further, vehicle **216** includes an over-the-air (OTA) client **218**. The OTA client **218** provides for communication between the vehicle **216** and the switchboard **214**.

In accordance with the embodiment of **Figure 2**, a software update may be downloaded to a vehicle prior to the installation of such update. The update may be provided, for example, through switchboard **214** or directly from an update server (not shown). Such software update download is shown by block **220**.

The download is however not installed at this point. The use of the pre-downloading of the update software allows installation of the software to occur more quickly once installation is started. Pre-downloading also ensures that a disruption in network communications will not impact installation times.

However, in other embodiments, the installation of the software may include downloading updates concurrently.

In the embodiment of **Figure 2**, if the software update is pre-downloaded, then the OTA client **218** may send a download complete message **222** to the switchboard **214**.

Switchboard **214** may then provide a download complete message **224** directly to an electronic device **210** in some embodiments. In other embodiments, the indication that the download is compete may be provided to a server such as to the authentication service **212** to provide a notification to the electronic **device 210**.

For example, in the embodiment of **Figure 2**, the authentication service **212** may be used to provide a notification to the electronic device **210**. In this regard, the authentication service may keep a list of electronic devices associated with the vehicle from which message **222** was sent, as relayed in message **224**.However, this is not limiting and in other embodiments, different servers may be used to associated electronic devices to vehicles and send message **224**.

In alternative embodiments in which pre-downloading does not occur, if a server has received an indication that an update is available, the server may keep a list or database of components installed in the various vehicles under its control. Therefore, the server may cross reference the update to a list of vehicles that need such update and then may further cross-reference to electronic devices associated with those vehicles.

Based on the association of the electronic device to the vehicle, the a server such as authentication service **212** may then send a message to the associated electronic device or devices, as shown with arrow **230** in the embodiment of **Figure 2**.

One of such subscribed users may be the user of electronic device **210**.

At some subsequent time when the installation of the update is appropriate, the user may then log in to a phone application or other software on electronic device **210** to initiate the installation of such software. In particular, in the embodiment of **Figure 2**, the user may perform an authentication with the authentication service **212**. A session identifier may be provided based on the authentication. The authentication is shown with arrow **240** in the embodiment of **Figure 2**.

Once a user of the electronic device is authenticated with the authentication service **212**, an identifier for the vehicle or device being upgraded may be entered. The identifier may be any number, code or designation that uniquely identifies the object being upgraded.

The identifier may be provided to the electronic device in various ways. For example, for a vehicle, the identification may be provided by manually entering a vehicle identification number, or by scanning a barcode or QR code in the vehicle.

In other embodiments, the identifier may be provided by clicking on a link in the message or notification received at arrow **230**. For example, an Android intent can be used to define a link in an email that could then launch an application on an Android type system. Similar functionality could be performed on an iOS device or other operating system device.

In other embodiments, the identifier may be input utilizing a pre-stored list within the electronic device **210**. For example, a user may be presented with a list of vehicle identifiers for vehicles associated with the electronic device **210**, and a user may select an identifier from the list.

Other options for entering an identifier into electronic device **210** are possible, and the present disclosure is not limited to any method of providing the identifier to the electronic device.

The entering of the identifier is shown in the embodiment of **Figure 2** with arrow **242**.

Subsequently, the electronic device **210** connects and communicates with switchboard **214** by sending a connect message **246**. Connect message **246** may include various information. For example, in the embodiment of **Figure 2** the message includes the identifier entered at arrow **242**, session information obtained at arrow **240**, as well as user information. However, in other embodiments different information may be provided in the connect message **246**.

The switchboard **214** may then validate the session received in message **246** with authentication service **212**, as shown by arrow **248**.

As will be appreciated by those in the art, the authentication service may be part of the switchboard **214**, in which case, the validation at arrow **248** is internal. In this case, the session token may not be required to be sent from the electronic device.

Once the electronic device is connected to the switchboard **214**, the electronic device may be prompted to have the user perform certain actions. For example, in the embodiment of **Figure 2**, the electronic device may prompt a user to put the vehicle into an update state as shown by arrow **250**. This may involve turning the engine off but having the key in a standby position, among other options. The present disclosure is not limited to any particular actions that need to be taken to put the vehicle into an update state.

The application or software on the electronic device may then prompt a user to perform an action which would not normally occur while the vehicle is in such update state. For example, in the embodiment of **Figure 2**, the prompt may involve instructing a user to press and hold a button or combination of buttons available to a user on the vehicle. This shown with arrow **252** in the embodiment of **Figure 2**.

In particular, the combination of actions at arrows **250** and **252** would typically not occur in the normal operation of the vehicle, thereby causing the vehicle to recognize that an update attempt is occurring. Specifically, in the embodiment of **Figure 2**, the CANBUS **217** on the vehicle realizes that the update state has been entered and that the button or combinations of buttons is being pressed. Therefore, the CANBUS **217** sends message **260** to the OTA client **218** indicating that the update preconditions have been met.

The OTA client **218** may then connect to the switchboard **214** by sending a connect message **264** along with the identification number for the vehicle.

The switchboard **214** may provide a notification, as shown by message **268**, to the electronic device **210** that a connection with the vehicle has been established.

Further, the OTA client **218** may inform the switchboard **214** that the update preconditions have been met, as shown by arrow **270**. This may further be relayed by switchboard **214** to the electronic device **210**, as shown with arrow **272**.

The electronic device **210** may then enable a user interface to allow the updates to be started, as shown by arrow **280**. For example, a "start" button may be enabled or become visible on the electronic device to allow the user to start the update.

If the user interface receives an input, such as pressing of a start button or other similar action to start the update, then the electronic device **210** may send a start command to switchboard **214**, shown by message **282**, which may then be relayed to the OTA client **218**, shown by message **284**.

Subsequently, the OTA client **218** cause the update to be started and may provide periodic status updates on the installation process to the switchboard **214**, shown with arrow **290**. Such status updates and progress reports may be relayed to the electronic device **210**, as shown by arrow **292**.

For example, during the update process, the OTA client **218** sends progress information including items such as percentage completed and remaining, as well as the overall outcome of the installation process, to the switchboard. The switchboard may then forward this information to the connected phone application or other element of the electronic device **210** to provide the user of the electronic device with such information.

In this way, the user of such electronic device will know the status of the update and when the update finishes.

Utilizing the embodiment of **Figure 2** above, various functionality is achieved. In particular, if the user is managing a fleet of devices, there is a need to ensure that the device identifier entered into the electronic device corresponds with the correct device to be updated. This is achieved based on the actions that are taken within the vehicle or other device being updated, along with interaction with the electronic device. The concurrent physical action on the device being updated and action on the electronic device ensures that the correct device is updated.

Further, the above embodiments prevent unintended updates. For example, if the electronic device initiates an update but no message is received from the vehicle, then the update process will not be started and the enablement of the "start" button will not occur. Further, if the vehicle indicates that the conditions for an update have been met but no electronic device has connected to try to do the update, then the switchboard may assume that such update preconditions were entered accidentally and no update is initiated.

In some embodiments, once the update process starts, it will proceed through to completion. This completion is either a successful completion or based on a roll back or failure of the software update. This ensures that even if the connection is lost to either the vehicle or the electronic device, that the update will continue.

In the above, security is provided through the fact that both the user of the electronic device needs to be authenticated to the authentication service, as well as the physical interaction with the device being updated. Thus, the combination of preconditions indicates that malicious updating of the vehicle is unlikely to occur. Further, the loading of the update itself may be done through a secure mechanism between the vehicle and an updated server.

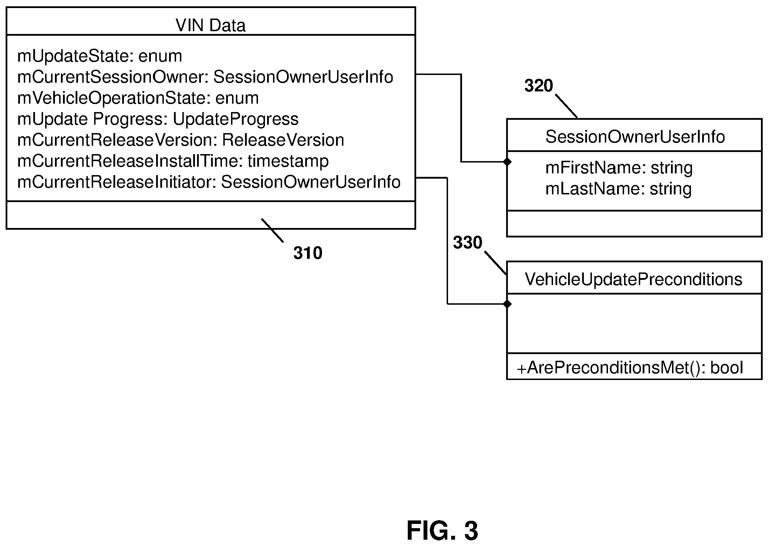

With regard to the OTA switchboard **214**, the switchboard may hold a list of vehicles and associated devices, and may simply forward messages from one to the other utilizing any messaging format. Thus, once the association between the device and the vehicle is established, over the OTA switchboard **214** merely acts as a conduit for forwarding messages between the two. For example, reference is now made to **Figure 3**, which shows an association between the vehicle identification number data for a vehicle with a session owner user information from an electronic device.

In the embodiment of **Figure 3**, the VIN data **310** may be associated with a plurality of states or variables, including an update state, the current session owner, the vehicle operational state, the update progress, the current release version, the current release install timestamp, and a release initiator.

The session owner user information **320** contains information identifying a user interacting with the remote OTA update control mechanism. For example, this may be an application on electronic device **210** from the embodiment of **Figure 2**.

The vehicle update preconditions **330** may be a set of preconditions that are configured to indicate whether the vehicle is ready for updating. These conditions may involve, for example, putting the ignition key into a run position without turning on the engine and holding cruise control. Other options including setting the parking brake, among other options, for the vehicle update preconditions are however possible.

Based on **Figures 1** to **3**, a vehicle that does not have a feedback mechanism can be updated through the use of an electronic device such as a mobile phone and through the use of a server that may act as a switchboard for communications between the vehicle and the electronic device.

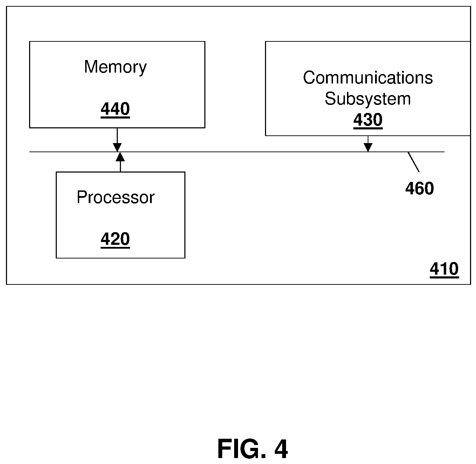

The device being updated or the electronic device may be any computing device. One simplified block diagram of a computing device is shown with regard to **Figure 4**.

In **Figure 4**, computing device **410** includes a processor **420** and a communications subsystem **430**, where the processor **420** and communications subsystem **430** cooperate to perform the methods of the embodiments described above. Communications subsystem **420** may, in some embodiments, comprise multiple subsystems, for example for different radio technologies.

Processor **420** is configured to execute programmable logic, which may be stored, along with data, on device **410**, and shown in the example of **Figure 4** as memory **440**. Memory **440** can be any tangible, non-transitory computer readable storage medium. The computer readable storage medium may be a tangible or in transitory/non-transitory medium such as optical (e.g., CD, DVD, etc.), magnetic (e.g., tape), flash drive, hard drive, or other memory known in the art.

Alternatively, or in addition to memory **440**, computing device **410** may access data or programmable logic from an external storage medium, for example through communications subsystem **430**.

Communications subsystem **430** allows device **410** to communicate with other devices or network elements and may vary based on the type of communication being performed. For example, if computing device **410** is an ECU, communications subsystem 430 may be the interface to a CANBUS. If computing device **410** is a server or OTA client then communications subsystem **430** may include wired or wireless communications such as cellular, WiFi, ethernet, fiber, among other options. Further, communications subsystem **430** may comprise a plurality of communications technologies, including any wired or wireless communications technology.

Communications between the various elements of device **410** may be through an internal bus **460** in one embodiment. However, other forms of communication are possible.

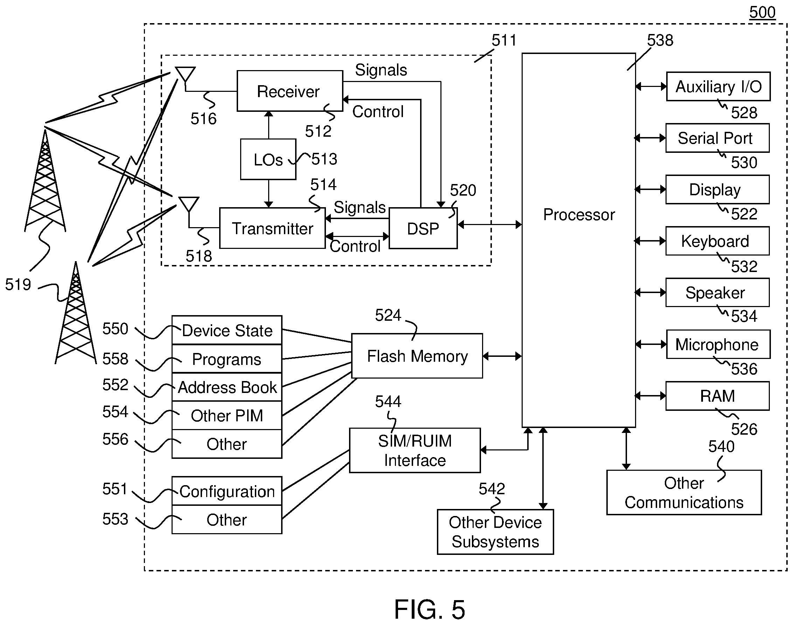

The computing device of **Figure 4** could be any fixed or mobile device. If the computing device is a mobile device, one example mobile device is described below with regard to **Figure 5**.

Mobile device **500** may comprise a two-way wireless communication device having voice or data communication capabilities or both. Mobile device **500** generally has the capability to communicate with other computer systems. Depending on the exact functionality provided, the mobile device may be referred to as a data messaging device, a two-way pager, a wireless e-mail device, a smartphone, a cellular telephone with data messaging capabilities, a wireless Internet appliance, a wireless device, a mobile device, an embedded cellular modem, an electronic device or a data communication device, as examples.

Where mobile device **500** is enabled for two-way communication, it may incorporate a communication subsystem **511**, including a receiver **512** and a transmitter **514**, as well as associated components such as one or more antenna elements **516** and **518,** local oscillators (LOs) **513**, and a processing module such as a digital signal processor (DSP) **520**. As will be apparent to those skilled in the field of communications, the particular design of the communication subsystem **511** will be dependent upon the communication network in which the mobile device is intended to operate.

Network access requirements will also vary depending upon the type of network **519**. In some networks, network access is associated with a subscriber or user of the mobile device **500**. A mobile device may require an embedded or a removable user identity module (RUIM) or a subscriber identity module (SIM) card or a UMTS SIM (USIM) in order to operate on a network. The USIM/SIM/RUIM interface **544** is normally similar to a card-slot into which a USIM/SIM/RUIM card can be inserted and ejected. The USIM/SIM/RUIM card can have memory and hold many key configurations **551**, and other information **553** such as identification, and subscriber related information.

When required network registration or activation procedures have been completed, mobile device **500** may send and receive communication signals over the network **519**. As illustrated in **Figure 5**, network **519** can include multiple base stations communicating with the mobile device.

Signals received by antenna **516** through communication network **519** are input to receiver **512**, which may perform such common receiver functions as signal amplification, frequency down conversion, filtering, channel selection and the like. Analog to digital (A/D) conversion of a received signal allows more complex communication functions such as demodulation and decoding to be performed in the DSP **520**. In a similar manner, signals to be transmitted are processed, including modulation and encoding for example, by DSP **520** and input to transmitter **514** for digital to analog (D/A) conversion, frequency up conversion, filtering, amplification and transmission over the communication network **519** via antenna **518**. DSP **520** not only processes communication signals, but also provides for receiver and transmitter control. For example, the gains applied to communication signals in receiver **512** and transmitter **514** may be adaptively controlled through automatic gain control algorithms implemented in DSP **520**.

Mobile device **500** generally includes a processor **538** which controls the overall operation of the device. Communication functions, including data and voice communications, are performed through communication subsystem **511**. Processor **538** also interacts with further device subsystems such as the display **522**, flash memory **524**, random access memory (RAM) **526**, auxiliary input/output (I/O) subsystems **528**, serial port **530**, one or more keyboards or keypads **532**, speaker **534**, microphone **536**, other communication subsystem **540** such as a short-range communications subsystem, DSRC subsystem 3GPP based V2X subsystem, or cellular subsystem, and any other device subsystems generally designated as **542**. Serial port **530** could include a USB port, On-Board Diagnostics (OBD) port or other port known to those in the art.

Some of the subsystems shown in **Figure 5** perform communication-related functions, whereas other subsystems may provide "resident" or on-device functions. Notably, some subsystems, such as keyboard **532** and display **522**, for example, may be used for both communication-related functions, such as entering a text message for transmission over a communication network, and device-resident functions such as a calculator or task list.

Operating system software used by the processor **538** may be stored in a persistent store such as flash memory **524**, which may instead be a read-only memory (ROM) or similar storage element (not shown). Those skilled in the art will appreciate that the operating system, specific device applications, or parts thereof, may be temporarily loaded into a volatile memory such as RAM **526**. Received communication signals may also be stored in RAM **526**.

As shown, flash memory **524** can be segregated into different areas for both computer programs **558** and program data storage **550**, **552**, **554** and **556**. These different storage types indicate that each program can allocate a portion of flash memory **524** for their own data storage requirements. Processor **538**, in addition to its operating system functions, may enable execution of software applications on the mobile device. A predetermined set of applications that control basic operations, including potentially data and voice communication applications for example, will normally be installed on mobile device **500** during manufacturing. Other applications could be installed subsequently or dynamically.

Applications and software may be stored on any computer readable storage medium. The computer readable storage medium may be a tangible or in transitory/non-transitory medium such as optical (e.g., CD, DVD, etc.), magnetic (e.g., tape) or other memory known in the art.

One software application may be a personal information manager (PIM) application having the ability to organize and manage data items relating to the user of the mobile device such as, but not limited to, e-mail, messages, calendar events, voice mails, appointments, and task items. Further applications, including device update applications, productivity applications, social media applications, games, among others, may also be loaded onto the mobile device **500** through the network **519**, an auxiliary I/O subsystem **528**, serial port **530**, short-range communications subsystem **540** or any other suitable subsystem **542**, and installed by a user in the RAM **526** or a non-volatile store (not shown) for execution by the processor **538**. Such flexibility in application installation increases the functionality of the device and may provide enhanced on-device functions, communication-related functions, or both.

In a data communication mode, a received signal such as a text message or web page download will be processed by the communication subsystem **511** and input to the processor **538**, which may further process the received signal for output to the display **522**, or alternatively to an auxiliary I/O device **528**.

A user of mobile device **500** may also compose data items such as messages for example, using the keyboard **532**, which may be a complete alphanumeric keyboard or telephone-type keypad, either physical or virtual, among others, in conjunction with the display **522** and possibly an auxiliary I/O device **528**. Such composed items may then be transmitted over a communication network through the communication subsystem **511**.

Where voice communications are provided, overall operation of mobile device **500** is similar, except that received signals may typically be output to a speaker **534** and signals for transmission may be generated by a microphone **536**. Alternative voice or audio I/O subsystems, such as a voice message recording subsystem, may also be implemented on mobile device **500**. Although voice or audio signal output is preferably accomplished primarily through the speaker **534**, display **522** may also be used to provide an indication of the identity of a calling party, the duration of a voice call, or other voice call related information for example.

Serial port **530** in **Figure 5** may be implemented in a mobile device for which synchronization with a user's desktop computer (not shown) may be desirable, but is an optional device component. Such a port **530** may enable a user to set preferences through an external device or software application and may extend the capabilities of mobile device **500** by providing for information or software downloads to mobile device **500** other than through a wireless communication network. As will be appreciated by those skilled in the art, serial port **530** can further be used to connect the mobile device to a computer to act as a modem or for charging a battery on the mobile device.

Other communications subsystems **540**, such as a short-range communications subsystem, is a further component which may provide for communication between mobile device **500** and different systems or devices, which need not necessarily be similar devices. For example, the subsystem **540** may include an infrared device and associated circuits and components or a Bluetooth^{™} or Bluetooth^{™} Low Energy communication module to provide for communication with similarly enabled systems and devices. Subsystem **540** may further include a DSRC radio or similar radio. Subsystem **540** may further include non-cellular communications such as Wi-Fi or WiMAX, or near field communications.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be employed. Moreover, the separation of various system components in the implementation descried above should not be understood as requiring such separation in all implementations, and it should be understood that the described program components and systems can generally be integrated together in a single software product or packaged into multiple software products.

Also, techniques, systems, subsystems, and methods described and illustrated in the various implementations as discrete or separate may be combined or integrated with other systems, modules, techniques, or methods. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made.

While the above detailed description has shown, described, and pointed out the fundamental novel features of the disclosure as applied to various implementations, it will be understood that various omissions, substitutions, and changes in the form and details of the system illustrated may be made by those skilled in the art. In addition, the order of method steps are not implied by the order they appear in the claims.

When messages are sent to/from an electronic device, such operations may not be immediate or from the server directly. They may be synchronously or asynchronously delivered, from a server or other computing system infrastructure supporting the devices/methods/systems described herein. The foregoing steps may include, in whole or in part, synchronous/asynchronous communications to/from the device/infrastructure. Moreover, communication from the electronic device may be to one or more endpoints on a network. These endpoints may be serviced by a server, a distributed computing system, a stream processor, etc. Content Delivery Networks (CDNs) may also provide may provide communication to an electronic device. For example, rather than a typical server response, the server may also provision or indicate a data for content delivery network (CDN) to await download by the electronic device at a later time, such as a subsequent activity of electronic device. Thus, data may be sent directly from the server, or other infrastructure, such as a distributed infrastructure, or a CDN, as part of or separate from the system.

Typically, storage mediums can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly a plurality of nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

The present disclosure extends to the following numbered clauses.

### CLAUSES

1. A method at a computing device acting as a switchboard between an electronic device and a device to be updated, the method comprising:
   receiving, at the computing device, a connection request from the electronic device, the connection request including an identifier for the device to be updated;
   receiving, at the computing device, a connection request from the device to be updated;
   associating, at the computing device, the connection request from the electronic device and the connection request from the device to be updated;
   forwarding, at the computing device, a message from the device to be updated to the electronic device that update conditions have been met;
   forwarding, at the computing device, a message from the electronic device to the device to be updated to start an update process; and
   forwarding, at the computing device, update status information from the device to be updated to the electronic device.
2. The method of clause 1, wherein the connection request from the device to be updated is received after physical interaction at the device to be updated.
3. The method of clause 1 or 2, wherein the device to be updated has no update feedback interface.
4. The method of any preceding clause, wherein the identifier is a vehicle identification number.
5. The method of any preceding clause, further comprising authenticating the connection request from the electronic device with an authentication service.
6. The method of clause 5, wherein the authenticating is based on a session identifier received in the connection request from the electronic device.
7. The method of any preceding clause, wherein at least one of the electronic device and device to be updated is on a private cellular network.
8. A computing device configured to act as a switchboard between an electronic device and a device to be updated, the computing device comprising:
   a processor; and
   a communications subsystem,
   wherein the computing device is configured to:
   receive a connection request from the electronic device, the connection request including an identifier for the device to be updated;
   receive a connection request from the device to be updated;
   associate the connection request from the electronic device and the connection request from the device to be updated;
   forward a message from the device to be updated to the electronic device that update conditions have been met;
   forward a message from the electronic device to the device to be updated to start an update process; and
   forward update status information from the device to be updated to the electronic device.
9. The computing device of clause 8, wherein the connection request from the device to be updated is received after physical interaction at the device to be updated.
10. The computing device of clause 8 or 9, wherein the device to be updated has no update feedback interface.
11. The computing device of any one of clause 8 to 10, wherein the identifier is a vehicle identification number.
12. The computing device of any one of clauses 8 to 11, wherein the computing device is further configured to authenticate the connection request from the electronic device with an authentication service.
13. The computing device of clause 12, wherein the authentication is based on a session identifier received in the connection request from the electronic device.
14. The computing device of any one of clauses 8 to 13, wherein at least one of the electronic device and device to be updated is on a private cellular network.
15. A computer program, which when executed by a processor of a computing device configured to act as a switchboard between an electronic device and a device to be updated, causes the computing device to carry out the method of any one of clauses 1 to 7.

## Claims

1. A method at a device to be updated (110, 112, 114; 216), the device to be updated being affixed to or part of an unmanned vehicle and lacking a graphical user interface configured to initiate and monitor installation of software update, the method comprising, at the device to be updated (216):
receiving (220) a software update download for updating software of the device to be updated (216);
determining (260) one or more device update preconditions (250, 252) indicating that the device to be updated (216) is ready for updating;
sending (264) to a computing device (214) acting as a switchboard between the device to be updated and an electronic device (210), a connection request to connect the device to be updated (216) to the computing device (214);
sending (270), to the computing device, information indicating that update conditions have been met;
receiving (284), from the computing device (214), an instruction to install the software update download; and
in response to the instruction, initiating an installation process to install the software update download.

2. The method of claim 1, wherein the connection request includes an identifier used by the computing device (214) to pair with the electronic device (210).

3. The method of claim 2, wherein the identifier is a vehicle identification number of the unmanned vehicle.

4. The method of any of the preceding claims, further comprising the device to be updated (216) sending (290), to the computing device (214), status messages concerning the installation of the software update download.

5. The method of any of the preceding claims, wherein the one or more device update preconditions (250, 252) comprises a user input that would only occur to signal that an update attempt is being requested.

6. The method of any of the preceding claims, wherein the one or more device update preconditions (250, 252) provides verification to the computing device that a user is present at the device to be updated.

7. The method of any of the preceding claims, wherein the device to be updated has no update feedback interface.

8. The method of any of the preceding claims, wherein the one or more device update preconditions (250, 252) comprises pushing a button of the unmanned vehicle.

9. The method any of the preceding claims, wherein the one or more device update preconditions (250, 252) is received after the computing device (214) has received an authenticated connection request from an electronic device (210) associated with a user of the device to be updated (216).

10. The method any of the preceding claims, wherein the one or more device update preconditions (250, 252) comprises one or more physical conditions.

11. A device (216) configured to be updated, the device being affixed to or part of an unmanned vehicle and comprising:
a processor; and
a communications subsystem,
wherein the device to be updated (216) is configured to carry out the steps of any one of claims 1 to 10.

12. A computer readable medium for storing instruction code, which when executed by a processor of a device to be updated cause the device to carry out the steps of any one of claims 1 to 10.
